# NEUE EUROPÄISCHE PATENTSCHRIFT

(11) **EP 2 173 140 B2**
(45) Veröffentlichungstag und Bekanntmachung des Hinweises auf die Entscheidung über den Einspruch: **27.08.2014**
(45) Hinweis auf die Patenterteilung: 23.02.2011
(21) Anmeldenummer: 09171435.2
(22) Anmeldetag: 28.09.2009
(51) Int. Cl.: H05B 33/08, B60Q 11/00

(54) **Verfahren und Schaltung zur Überwachung von Fahrzeugbeleuchtung mit Glühlampensimulation**
Method and switch for monitoring vehicle lighting with bulb simulation
Procédé et commutation pour la surveillance d'éclairages de véhicules dotés d'une simulation de lampes à incandescence

(30) Priorität: 02.10.2008 DE 102008042595
(43) Veröffentlichungstag der Anmeldung: 07.04.2010
(73) Patentinhaber: Kliem, Thomas, 78628 Rottweil (DE)
(72) Erfinder: Kliem, Thomas, 78628 Rottweil (DE); Krank, Jürgen, 78183 Hüfingen (DE)
(74) Vertreter: Gustorf, Gerhard

(56) Entgegenhaltungen:
- DE-A1- 10 359 196
- DE-A1-102006 018 308
- DE-U1-202007 007 777
- US-A1- 2003 042 908

## Beschreibung

Die Erfindung betrifft ein Verfahren und eine Schaltung zur Überwachung von Fahrzeugbeleuchtung mit Glühlampensimulation nach dem Oberbegriff des Patentanspruchs 1 bzw. des Patentanspruchs 3.

Bei diesem Verfahren und der Schaltung gemäß der Erfindung handelt es sich um ein System zur Leistungsrückführung in das Bordnetz bei Last- bzw. Leistungssimulation in Verbindung mit modernen Leuchtmitteln (z.B. LED-Technik) bei Lichtfunktionen wie z.B. Blinker, Bremslicht, Rücklicht, Nebelschlusslicht oder Rückfahrlicht bei Fahrzeugen aller Art (PKW, LKW mit oder ohne Anhänger), unabhängig von der Bordspannung (z.B. 12V oder 24V).

Gesetzlichen Vorschriften zufolge (z.B. ECE Regelung Nr. 48, Pkt. 6.5.8.) müssen die Blinklichter auf Fahrzeugen überwacht und ein Ausfall dem Fahrer optisch und/oder akustisch mitgeteilt werden. Viele Fahrzeughersteller überprüfen aus Gründen erhöhter Sicherheit noch weitere Lichtfunktionen wie z.B. Bremslicht, Rücklicht etc.

Das Problem besteht jedoch darin, dass für die Funktionsüberwachung der Lichtfunktionen die Fahrzeugelektroniken für den Betrieb mit Glühlampen ausgelegt sind. Die Schwellenwerte liegen daher im Bereich der für Glühlampen definierten Leistungen wie beispielsweise 5W, 10W oder 21 W.

Da jedoch moderne Leuchtmittel gegenüber herkömmlichen Glühlampen wesentlich bessere Betriebseigenschaften aufweisen (längere Lebensdauer, geringere Anfälligkeit gegenüber Vibrationen am Fahrzeug usw.), werden in der Praxis immer häufiger die Glühlampen durch modernere Leuchtmittel ersetzt, beispielsweise LED. Diese benötigen jedoch im Vergleich zu den Glühlampen wesentlich weniger Leistung (etwa 3 bis 5 W), wodurch die Fahrzeugelektroniken beim Betrieb mit modernen Leuchtmitteln fälschlicherweise einen Ausfall der jeweiligen Lichtfunktion optisch und/oder akustisch anzeigen würden. Bisherige Fahrzeugelektroniken verlangen nämlich z.B. bei der Funktion Blinken eine Last von mindestens 18 W. Wenn diese Leistung nicht abgenommen wird, so detektiert die Fahrzeugelektronik einen Fehler. Eine LED-Blinklampe hat üblicherweise eine Last von 3 bis 5W, was eine Differenz von 13 bis 15W darstellt. Bestehende Systeme haben nun diese Differenz durch Zuschalten von Lastwiderständen simuliert. Die Problematik von Lastwiderständen besteht in ihrer hohen Wärmeentwicklung und ihrem schlechten Wirkungsgrad.

In DE 102 15 486 C1 wird das erläuterte Problem durch Zuschalten einer parallel zur LED-Lampenanordnung und in einem Vorschaltgerät angeordneten elektrischen Last gelöst, wobei allerdings sehr viel Verlustleistung entsteht, die in Wärme umgewandelt und gekühlt werden muss.

Gemäß EP 1 653 782 A1 erfolgt die Lösung beispielsweise über eine Konstantstromregelung, welche die zusätzlich notwendige Leistung aufnimmt. Auch bei dieser Lösung entsteht sehr viel Verlustleistung, die es zu kühlen gilt.

In DE 101 07 578 A1 wird dieses Problem ebenfalls mit einer parallel zu den Leuchten zumindest für ein bestimmtes Zeitfenster zuschaltbaren elektrischen Last gelöst. Diese Lösung setzt jedoch voraus, dass alle Fahrzeugelektroniken in Bezug auf den Zeitpunkt der Funktionsüberwachung auf dieses Zeitfenster synchronisiert werden müssen , in dem wiederum eine Glühlampe simuliert und hohe Verlustleistung erzeugt wird. Da jedoch die Zeitpunkte der Funktionskontrolle von Fahrzeughersteller zu Fahrzeughersteller variieren und die sich bereits in Umlauf befindlichen und durch Lampentausch (von der Glühlampe z.B. zur LED-Leuchte) betroffenen Fahrzeuge kaum zu erfassen sind, ist auch diese Lösung für den derzeitigen Stand nicht zielführend.

Zusammenfassend werden bei allen diesen Lösungen parallel zu den Leuchtmitteln angeordnete elektrische Lasten zugeschaltet, welche die Differenz der Leistung von modernen Leuchtmitteln zu den Schwellenwerten für Glühlampen in Wärme umwandeln und aufgrund des schlechten Wirkungsgrades regelrecht "verheizen".

Der Erfindung liegt die Aufgabe zugrunde, ein System zum Betrieb von Fahrzeugen mit modernen Leuchtmitteln zu entwickeln, bei dem einerseits die Fahrzeughersteller die Funktionsüberwachung belassen können, vor allem für die sich bereits im Einsatz befindlichen Fahrzeuge, und andererseits keine oder so wenig als möglich Verlustleistung erzeugt wird.

Zur Lösung dieser Aufgabe ist gemäß der Erfindung vorgesehen, dass die erfindungsgemäß ausgebildete Schaltung eine Last simuliert und der Fahrzeugelektronik eine definierte Leistung (einen definierten Strom) entzieht, die sie dem System (Batterie, Lichtmaschine) teilweise wieder zuführt. Die Ausgangsspannung der Regelschaltung wird solange erhöht, bis der eingestellte oder gewünschte Strom von dem Fahrzeugsystem (Batterie, Lichtmaschine) abgenommen wird. Wenn der Motor läuft, so regelt sich die Lichtmaschine automatisch zurück. Das bedeutet, dass sich der von der Lichtmaschine abgegebene Strom um den Anteil reduziert, den die Elektronik zurückspeist. Wenn nur die Batterie die Energie liefert, so reduziert sich der entnommene Strom aus der Batterie ebenfalls um den Anteil, den die Elektronik zurückspeist. Für jede Lichtfunktion kann der benötigte Strom eingestellt werden.

Die Schaltung basiert auf dem Prinzip eines Schaltreglers; bei der Erfindung ist vorzugsweise das Prinzip des Sperrwandlers verwendet. Durch dieses Prinzip lassen sich verschiedene Spannungen und Ströme realisieren. Es können mehrere Kanäle mit verschiedenen Strömen und Leistungen parallel betrieben werden. Die Schaltung zur Energierückspeisung weist einen Wirkungsgrad von ca. 80 - 90% auf. Diese Energieeinsparung verringert die Belastung des Bordnetzes erheblich, was auch zur Treibstoffreduzierung beiträgt.

Die Erfindung ist nachstehend an einem Ausführungsbeispiel erläutert, das in der Zeichnung dargestellt ist. Es zeigen:
Figur 1 das Blockschaltbild eine für die Erfindung einsetzbaren elektronischen Schaltung,
Figur 2 schematisch eine Glühlampensimulation nach dem Stand der Technik,
Figur 3 eine der Figur 2 entsprechende Darstellung mit einer Schaltung gemäß der Erfindung,
Figur 4 eine herkömmliche Anordnung der Spule L1.

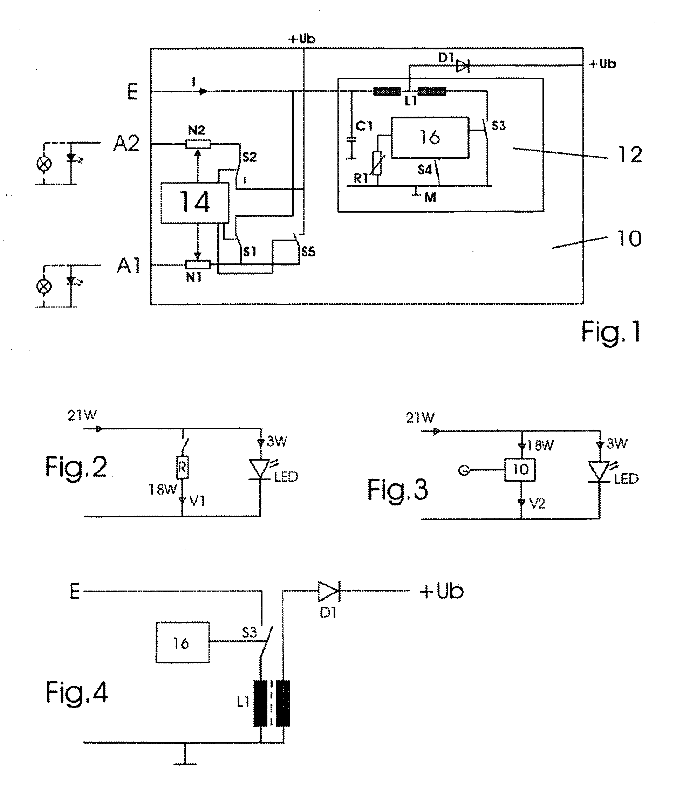

In Figur 2 ist schematisch der Stand der Technik zur Funktionsüberwaschung einer LED mit Glühlampensimulation dargestellt. Vom Bordsystem des Fahrzeugs wird eine für Glühlampen übliche Leistung von 21 W zur Verfügung gestellt, von der nur ein geringer Anteil von etwa 3 W für die LED benötigt wird, während die Differenz von 18 W in einem Widerstand R "vernichtet", d. h. in Wärme umgewandelt wird. Diese Wärme führt zu einer starken Temperaturerhöhung von nicht selten 100° C und muß zur Gänze (100 % Verlust V1) durch Kühlung abgeführt werden.

Figur 3 zeigt dagegen das System gemäß der Erfindung mit einer Schaltung 10, die in Figur 1 dargestellt ist. In dieser Schaltung wird der größte Teil der Leistung (ca. 90 %) als Gewinn G in das System (z. B. Batterie) zurückspeist, während nur ein geringer Teil (ca. 10 %) als Verlust V2 in Wärme umgewandelt wird.

Das Blockschaltbild der Figur 1 zeigt eine elektronische Schaltung 10 gemäß der Erfindung, die zur Ansteuerung und Überwachung von Fahrzeugbeleuchtungen (Anhänger- oder Rückwandleuchten) dient. Sie hat einen von der Fahrzeugelektronik kommenden Eingang E für den Laststrom I (Glühlampenstrom) und zwei Ausgänge A1, A2 für die jeweilige Fahrzeugbeleuchtung, die alternativ aus einer Glühlampe oder einer LED bestehen kann. Der Ausgang A2 führt zu einer Zusatzbeleuchtung, beispielsweise einer am Fahrzeug oben angebrachten Beleuchtung, die sich meistens gar nicht oder nur sehr schwer überwachen lässt. Die Fahrzeugelektronik überwacht diese Beleuchtung in der Regel nicht, da es sich um Zusatzleuchten handelt, die bei Reisebussen, Tankfahrzeugen oder Einsatzfahrzeugen als Zusatzleuchten eingesetzt werden, um die Sicherheit zu erhöhen.

Unter dem Begriff Leuchten werden alle Funktionen verstanden, die vom Gesetzgeber vorgeschrieben sind (Blinker, Rücklicht, Bremslicht und dgl.) und die nach den gesetzlichen Vorgaben überwacht werden müssen.

Wie Figur 1 zeigt, führt von der Fahrzeugelektronik die Stromleitung 1 über den Eingang E zu einer Regelschaltung 12, die zur Glühlampensimulation dient. Diese Schaltung 12 kann über den Schalter S4 (vorzugsweise elektronischer Schalter wie Transistor oder FET) ein- und ausgeschaltet werden. Sie hat eine Ansteuerschaltung 16, z.B. in Form eines IC-integrierten Regelkreises, der über den Schalter S3 (vorzugsweise elektronischer Schalter wie Transistor oder FET) angesteuert wird und zur Stromeinstellung dient. Über den Widerstand R1 kann der Strom eingestellt werden, was über ein Potentiometer oder über feste Widerstände erfolgen kann, die durch Schalter zu- oder abgeschaltet werden. Im Falle eines festen Widerstands R1 wird dieser vom Hersteller vorkonfiguriert.

Durch den Schalter S3 wird die Regelung getaktet, z.B. mit einer Frequenz von 20 kHz. Durch dieses Takten wird in der Spule L1, die hier eine Doppelspule mit Mittenabgriff ist, jedoch auch eine Einzelspule sein kann, ein Magnetfeld aufgebaut. Die Energie der Spule L1 wird in Form eines Stromimpulses mit der Spannung Ub in das Bordnetz zurück gegeben.

Innerhalb der elektronischen Schaltung 12 dient der Eingangskondensator C1 zur Glättung und Pufferung der Eingangsspannung, kann aber auch den Einschaltimpuls einer Glühlampe simulieren.

Der Vorteil einer Doppelspule L1 mit Mittenabgriff besteht darin, dass aufgrund der zwei Wicklungen der Wirkungsgrad erhöht wird Durch ihre Geometrie reduziert sie die Verlustleistung und beeinflusst den Wirkungsgrad der Schaltung 12. Die Spule ist maßgeblich für die Strombelastung verantwortlich; im Falle einer Doppelspule mit zwei unterschiedlichen Wicklungen kann der Schalter S3, z.B. ein Transistor, entlastet und damit kleiner konzipiert werden.

Die Spule L1 könnte nach herkömmlicher Technik wie in Fig. 4 angeordnet werden, jedoch hat die Anordnung von L1 wie in Fig. 1 dargestellt den Vorteil, dass nach Öffnen von S3 zum Abbau des Magnetfeldes weiterhin Strom von E gezogen wird und deshalb die Spule kleiner dimensioniert werden kann.

Das Herzstück der Regelschaltung 12 ist der durch den Schalter S3 und die Spule L1 gebildete Schaltregler zum Takten, der beispielsweise wie ein Sperrwandler oder Flusswandler konzipiert sein kann. Dabei wird die Eigenschaft genutzt, dass sich ein Sperrwandler auf einen konstanten Strom einstellt, indem er die Spannung Ub solange erhöht, bis der gewünschte Strom erreicht wird. Im zweiten Teil der Schaltung 10 wirkt er daher als Ladegerät zur Erhöhung der Spannung Ub.

Die Diode D1 verhindert einen Stromrückfluss.

Eine Strommeßschaltung 14 führt über einen Shunt N1 bzw. N2 (Nebenwiderstände zur Erzeugung eines Spannungsabfalls) zu dem Ausgang A1 bzw. A2. Die Schalter S1, S2 bzw. S5 dienen zum Abschalten bzw. Umschalten der Last beim Erkennen eines Fehlers. Über diese Shunts werden Strommessungen zur Überwachung der Leuchtmittel realisiert. Sobald ein Wert eine Obergrenze überschreitet (z.B. 2A, Kurzschluss oder Überlast) oder eine Untergrenze unterschreitet (z.B. 8mA, Lampenausfall oder Leitungsunterbrechung), wird eine Fehlermeldung abgegeben.

Bei Erkennung eines Fehlers in der Fahrzeugbeleuchtung durch die Strommeßschaltung 14 und N1 und/oder N2 wird mit dem Schalter S4 die Lampensimulation ausgeschaltet. Hierdurch wird am Eingang E kein Strom mehr abgenommen und die Fahrzeugelektronik erkennt den Fehler.

Der Schalter S1 wird serienmäßig auf den Stromeingang E geschaltet, wie Figur 1 zeigt. Bei einem Lampendefekt am Ausgang A1 wird die Lampe durch den Schalter S1 ausgeschaltet.

Bei einer Fehlererkennung an den oberen Zusatzleuchten (Ausgang A2) werden die noch funktionierenden unteren Leuchten (Ausgang A1) auf +Ub über S1 und S5 umgeschaltet, damit sie angeschaltet bleiben, obwohl sie nicht mehr vom der Fahrzeugelektronik selbst versorgt werden.

Bei einem derartigen Defekt werden die Schalter S1, S2 ausgeschaltet und S5 eingeschaltet. Damit wird der überlaststrom über den Ausgang A2 verhindert. Gleichzeitig wird S4 geöffnet (Ausschalten von 12 und 16), dadurch fließt in E kein Strom mehr. Daraus folgt die Fehlererkennung durch die Fahrzeugelektronik.

Die Schaltung 10 verwendet die Fehlerüberwachung des Fahrzeugs. Durch Abschalten der Regelschaltung 12 und damit der Lastsimulation durch den Schalter S4 und Umschalten der Schalter S1,S2 und S5 (können als elektromechanische Schalter wie z.B. Relais oder vorzugsweise als elektronische Schalter wie Transistor oder FET ausgeführt sein) kann an der Fahrzeugelektronik ein Fehler simuliert werden.

Mit der Erfindung ist die Möglichkeit geschaffen, die Stromentnahme von der Batterie und Lichtmaschine sehr zu reduzieren, wobei auch der Motor ausgeschaltet sein kann und damit der Kraftstoffverbrauch und die Abgaserzeugung reduziert werden. Der Betrieb bei ausgeschaltetem Motor ist vor allem auch wesentlich bei Einsatzfahrzeugen der Polizei, Feuerwehr oder der Rettung. Mit dieser Schaltung ist die Möglichkeit geschaffen worden , dass die LED-Technik in bestehende Fahrzeuge integriert werden kann.

## Patentansprüche

1. Schaltung zur Überwachung von Fahrzeugbeleuchtungen mit einer elektronischen Schaltung (10), die eine Regelschaltung (12) zur Glühlampensimulation aufweist, in der eine Glühlampe durch eine parallel zu einer zu überwachenden Leuchtdiode (LED) geschaltete Last in der Regelschaltung (12) simuliert wird, **dadurch gekennzeichnet, dass** die Regelschaltung (12) einen Schaltregler mit einer getakteten Regelungsschaltung (IC) zur Einstellung eines konstanten Stroms und zur Erzeugung einer Ladespannung (Ub) hat und den Rückfluss eines Teils der bei der Lastsimulation verbrauchten Leistung als Leistungsgewinn (G) in die Bordspannungsquelle bewirkt, wobei der Schaltregler eine Spule (L1) zur Abgabe der Spannung (Ub) und einen eine Ansteuerschaltung (16) ansteuernden Schalter (S3) aufweist, der eine Frequenz in der Größenordnung von 20 kHz hat, wobei die Spule (L1) eine Doppelspule mit Mittenabgriff ist.

2. Schaltung nach Anspruch 1, **dadurch gekennzeichnet, dass** die Ansteuerschaltung (16) durch einen Schalter (S4) zu- und abschaltbar ist.

3. Schaltung nach Anspruch 1 oder 2, **dadurch gekennzeichnet, dass** die Ansteuerschaltung (16) einen Widerstand (R1) zur Stromeinstellung hat.

4. Schaltung nach einem der Ansprüche 1 bis 3, **dadurch gekennzeichnet, dass** in der Regelschaltung (12) zur Pufferung der Eingangsspannung ein Eingangs-Kondensator (C1) angeordnet ist, der beim Einschalten der Beleuchtung einen Einschaltimpuls zum Simulieren einer Glühlampe erzeugt.

5. Schaltung nach einem der vorhergehenden Ansprüche , **dadurch gekennzeichnet, dass** die elektronische Schaltung (10) wenigstens zwei Ausgänge (A1, A2) hat, von denen ein Ausgang (A1) mit der von der Fahrzeugelektronik überwachten Beleuchtung verbunden ist, während der weitere Ausgang (A2) zu nicht von der Fahrzeugelektronik überwachten Zusatzbeleuchtungen führt.

6. Schaltung nach Anspruch 5, **dadurch gekennzeichnet, dass** in der elektronischen Schaltung (10) eine Strommeßschaltung (14) mit den Ausgängen (A1, A2) verbunden ist.

7. Schaltung nach Anspruch 6, **dadurch gekennzeichnet, dass** bei Erkennen eines Fehlers in der Fahrzeugbeleuchtung durch die Strommeßschaltung (14) die Schalter (S1, S2, S4, S5) zur Fehlererkennung durch die Fahrzeugelektronik umschaltbar sind.

## Claims

1. Circuitry for monitoring vehicle lighting comprising an electronic circuit (10) having a control circuit (12) for incandescent lamp simulation in which an incandescent lamp is simulated by a load of the control circuit (12) connected in parallel to a light-emitting diode (LED) to be monitored, **characterized in that** said control circuit (12) has a switching controller with a triggered control unit (1C) for adjusting a constant current and for generating a charging voltage (Ub) and is effecting the backflow of part of the power consumed due to the load simulation as gain (G) into the inboard power supply system, wherein said switching controller comprises a coil (L1) for discharging the voltage (Ub) and a switch (S3) controlling a driving circuit (16), said switch (S3) having a frequency in the range of 20 kHz, said coil (L1) being a compound coil with centric tap.

2. Circuitry according to Claim 1, wherein said driving circuit (16) may be switched on and off by means of a switch (S4).

3. Circuitry according to claim 1 or 2, wherein said driving circuit (16) is provided with a current adjusting resistor (R1).

4. Circuitry according to any of the preceding claims 1 to 3, wherein said control circuit (12) comprises an input capacitor (C1) buffering the input voltage which produces, when switching on the lighting, a turn-on pulse for simulating an incandescent lamp.

5. Circuitry according to any of the preceding claims , wherein said electronic circuit (10) comprises at least two output terminals (A1, A2), one of which (A1) being connected with the lighting monitored by the vehicle electronic systems, whereas the second one (A2) leads to additional lightings not monitored by the vehicle electronic system.

6. Circuitry according to claim 5, wherein within said electronic circuit (10) a current metering circuit (14) is connected with said output terminals (A1, A2).

7. Circuitry according to claim 6, wherein in the case an error is detected in the vehicle lighting by said current metering circuit (14), the switches (S1, S2, S4, S5) are adapted to be changed over in order to detect the error by means of the vehicle electronic circuit.

## Revendications

1. Commutation pour la surveillance de l'éclairage de véhicules comprenant un circuit électronique (10) muni d'un circuit de régulation (12) pour la simulation de lampes à incandescence, dans lequel une lampe à incandescence est simulée par une charge commutée en parallèle à la diode électroluminiscente (LED) à surveiller dans le circuit de régulation (12), **caractérisée par le fait que** le circuit de régulation (12) est muni d'un régulateur de commutation possédant un circuit de réglage (IC) cadencé pour ajuster un courant constant et pour créer une tension de charge (Ub) et pour effectuer la réintroduction d'une partie de la puissance consommée pour la simulation de charge en tant que gain de puissance (G) dans la source de tension de bord, ledit régulateur de commutation possède une bobine (L1) pour fournir la tension (Ub) et un commutateur (S3) pour l'excitation d'un circuit d'excitation (16), ledit commutateur (S3) ayant une fréquence d'environ 20 kHz, la bobine (L1) ayant la forme d'une bobine double avec prise médiane.

2. Commutation selon la revendications 1 **caractérisée par le fait que** le circuit d'excitation (16) peut être activé ou désactivé par un commutateur (S4).

3. Commutation selon la revendication 1 ou 2 **caractérisée par le fait que** le circuit d'excitation (16) a une résistance (R1) pour ajuster le courant.

4. Commutation selon une des revendications 1 à 3 **caractérisée par le fait que** dans le circuit de régulation (12) se trouve un condensateur d'entrée (C1) pour amortir la tension d'entrée, qui produit à l'allumage de l'éclairage une impulsion de commutation pour simuler la lampe à incandescence.

5. Commutation selon une des revendications précédentes **caractérisée par le fait que** le circuit électronique (10) a au moins deux sorties (A1, A2) dont l'une (A1) est reliée à l'éclairage surveillé par le système électronique de véhicule, tandis que l'autre (A2) est reliée aux éclairages additionnels non surveillés par le système électronique de véhicule.

6. Commutation selon la revendication 5 **caractérisée par le fait que** dans le circuit électronique (10) un circuit de mesure de courant (14) est relié aux sorties (A1, A2).

7. Commutation selon la revendication 6 **caractérisée par le fait que**, dans le cas d'une reconnaissance de défaut dans l'éclairage de véhicule par le circuit de mesure de courant (14), les commutateurs (SI, S2, S4, S5) peuvent être inversés pour la reconnaissance de défaut par le système électronique de véhicule.
